# EUROPEAN PATENT APPLICATION

(11) **EP 2 512 066 A1**
(43) Date of publication of application: **17.10.2012**
(21) Application number: 12164291.2
(22) Date of filing: 16.04.2012
(51) Int. Cl.: H04L 12/26

(54) **Testing shaped TCP traffic**

(30) Priority: 15.04.2011 US 201161475915 P
(71) Applicant: JDS Uniphase Corporation, Milpitas, CA 95035 (US)
(72) Inventor: Constantine, Barry, Mount Airy, MD Maryland 21771 (US)
(74) Representative: Harrison Goddard Foote

(57) **Abstract**

A testing system for a TCP network that provides an innovative and bounded test approach to a network configuration that otherwise would require live user traffic and subjective means to determine if the traffic was being shaped or policed. The parameters of a network segment are determined, and then a plurality of connections are used to properly stress network buffers and the traffic shaping function. A throughput chart can then be generated to determine if the network segment has been properly shaped.

## Description

### CROSS-REFERENCE TO RELATED APPLICATIONS

The present invention claims priority from United States Patent Application No. 61/475,915 filed April 15, 2011, which is incorporated herein by reference.

### TECHNICAL FIELD

The present invention relates to testing TCP data networks, and in particular to testing shaped TCP traffic using multiple TCP connections.

### BACKGROUND OF THE INVENTION

For network access services in which the available bandwidth is rate limited, i.e. includes a rate-limited bandwidth referred to as the "Bottleneck Bandwidth", two techniques can be used to manage the transmission of excess data: traffic policing or traffic shaping. Simply stated, traffic policing marks and/or drops packets, which exceed the service level agreement (SLA) bandwidth, but unfortunately in most cases, excess traffic is simply dropped. Traffic shaping employs the use of queues to temporarily store traffic exceeding the SLA, and subsequently sending the traffic out smoothly within the SLA. Traffic shaping techniques eliminate the dropping of packets unless the traffic shaping queues themselves become filled beyond capacity. Accordingly, proper traffic shaping will provide a fair distribution of the available Bottleneck Bandwidth over time, while traffic policing does not.

Traffic shaping is generally configured for transmission control protocol (TCP) data services, and can provide improved TCP performance, since the number of required data retransmissions is reduced, thereby optimizing TCP throughput for the available bandwidth.

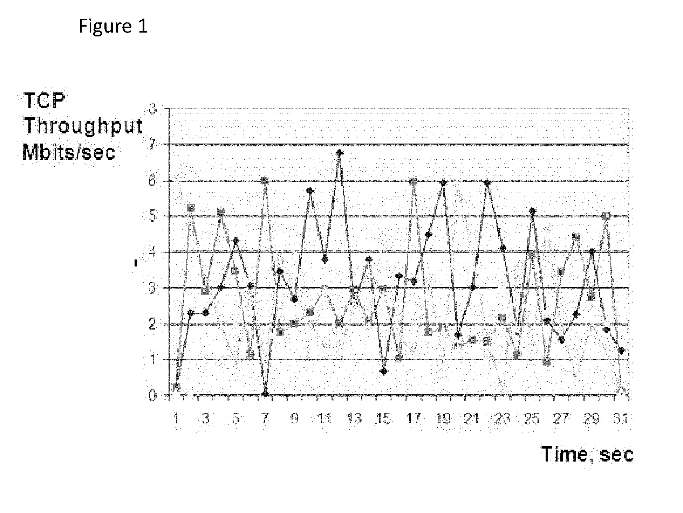

Figure 1 plots the TCP throughput of four TCP connections in a policed network segment, which illustrates that the four TCP connections did not evenly share the allotted 10 MBits/sec, as certain connections were reduced (policed) to 0 throughput, as the other connections monopolized the bandwidth causing uneven (not smoothed) transmission. In the traffic utilization chart, the bandwidth is unevenly divided as the connections are forced to retransmit packets due to the policing.

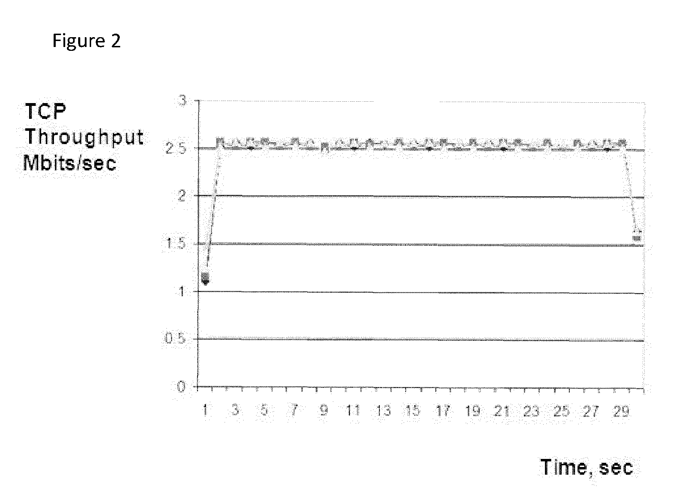

Figure 2 plots the TCP throughput of four TCP connections in a shaped network segment, which illustrates that the four connections evenly shared the 10 MBits/sec over the entire time period resulting in a smoothed transmission, a variation of up to 5% is acceptable.

Network elements require specific device configuration (referred to as configuration commands) to properly configure traffic shaping throughout a network segment, but unfortunately this process is error prone. An object of the present invention is to overcome the shortcomings of the prior art by providing a testing system to verify that traffic is shaped properly, thereby verifying the network operator's device configurations.

### SUMMARY OF THE INVENTION

Accordingly, the present invention relates to a method of testing whether a network segment is properly traffic shaped comprising:

providing first and second testing devices at opposite ends of the network segment;

determining bandwidth capacity of the network segment;

determining round trip time between first and second testing devices;

determining bandwidth delay product from bandwidth capacity and round trip time;

determining number of connections to provide a cumulative TCP window greater than the bandwidth delay product; and

transmitting data over the number of connections at the cumulative TCP window from the first testing device to the second testing device generating a throughput chart for the connections to determine if the network segment is properly traffic shaped.

Another aspect of the present invention relates to the associated FPGA / embedded software required to perform the aforementioned method.

The invention also covers the case of interpreting the results in a post analysis fashion, i.e. using network packet captures and backend data charting tools).

### BRIEF DESCRIPTION OF THE DRAWINGS

The invention will be described in greater detail with reference to the accompanying drawings which represent preferred embodiments thereof, wherein:

Figure 1 is a plot of TCP throughput vs time for four connections in a policed network;

Figure 2 is a plot of TCP throughput vs time for four connections in a shaped network;

Figure 3 is schematic diagram of the network under test in accordance with the present invention; and

Figure 4 is a flowchart of the algorithm of the method of the present invention.

### DETAILED DESCRIPTION

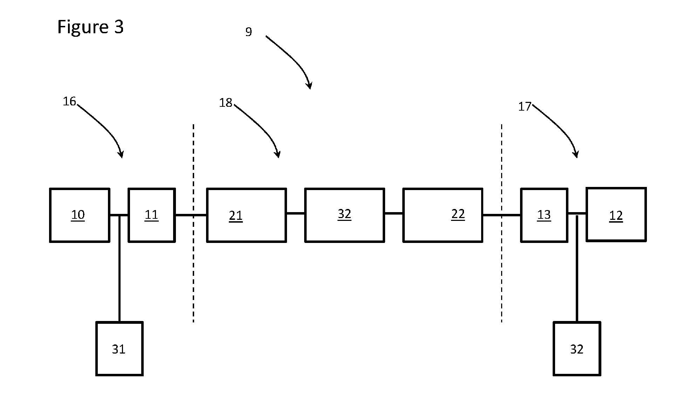

With reference to Figure 3, traffic shaping can occur in a variety of network segments, either in end-customer network equipment or network provider devices. In the illustrated embodiment, a network segment under test (NSUT) 9 extends between a first host computer 10 linked to the network via a first access router 11 to a second host computer 12 linked to the network via a second access router 13. The section of the network segment including the first host computer 10 and the first access router 11 is characterized as a first customer domain 16, while the section of the network segment including the second host computer 12 and the second access router 13 is characterized as the second customer domain 17. The remainder of the network segment 9, characterized as a Network Provider Domain 18 can include any number of modules, links and routers, e.g. first and second edge routers 21 and 22, respectively, for the transmission of packets to adjacent networks and one or more core routers 23 for the transmission of packets within the network segment 9.

The ability to detect proper traffic shaping is more easily diagnosed when conducting a multiple TCP-connections test. The traffic shaping test uses first and second TCP testing devices (TTDs) 31 and 32, the first TTD 31 at the near-end of the NSUT 9, and the second TTD 32 at the far-end of the NSUT 9. For the purposes of this test, the direction of traffic will be from the Client TTD to the Server TTD, i.e. the first TTD 31 to the second TTD 32, respectively, and both will assume the roles during two sequential test steps. The TTD's 31 and 32 comprise suitable connectors to interface to the network segment 9 and suitable hardware and software for transmitting and capturing data packets therefrom. A controller 35 provided in one or both of the TTD's 31 and 32 or in a separate device, is typically in the form of a computer processor, and controls all the functions of the TTD's 31 and 32. The current TTDs 31 and 32 utilize FPGAs to generate stateful TCP connections up to line rates of 10 GBe and up to 128 concurrent TCP connections; however greater than 10GBe is possible, e.g. up to 100GBe. The TTDs 31 and 32 are also able to plot each of these connections in real time as the test is executed post analysis with integrated packet capture capability (up to 10 GBe).

To determine the proper number of TCP connections to use for the traffic shaping test, the bandwidth delay product (BDP) must first be calculated. The BDP is equal to: Bandwidth Capacity (BC) of the Network Systems Under Test (NSUT) multiplied by the Round-Trip Time (RTT) between the two TCP testing devices (TTD) / 8 = # Bytes.

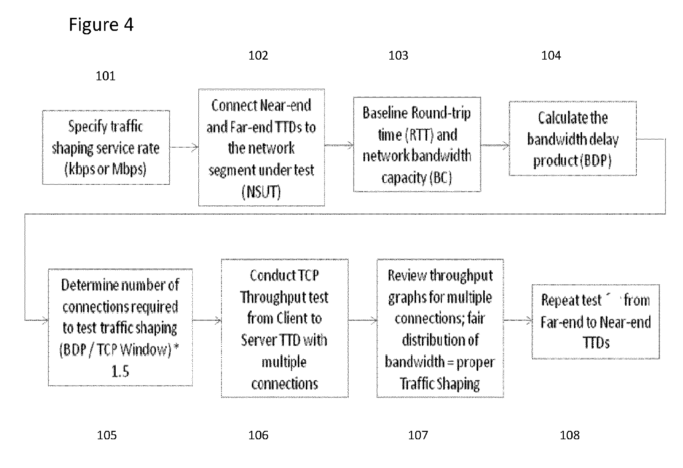

The first and second TTD's 31 and 32 typically are inserted proximate opposite ends of the NSUT 9 between the access routers 11 and 13 and the host computers 10 and 12, respectively, as shown in Figure 3, and as step 102 in Figure 4. The first TTD 31 injects stateless IP traffic, e.g. user datagram protocol (UDP), to test the bandwidth capacity of the network NSUT 9. The first TTD 31 gradually increases the amount of traffic launched into the NSUT 9 to the second TDD 32 until a maximum capacity is reached, which is the maximum capacity of the NSUT 9 before packet loss occurs, as determined at the second TDD 32. During the same test, the RTT is measured by sending the test traffic from the first TTD 31 to the second TTD 32, which loops the test traffic back the first TTD 32, and measuring the RTT of the returned packets, as illustrated in step 103 of Figure 4. A plurality of experiments can be conducted to verify the accuracy of the BC and RTT results.

The traffic shaping test is preferably run over a long enough duration to properly exercise network buffers, e.g. greater than 30 seconds, and should also characterize performance at different times of day, e.g. at least twice, preferably at least four times, and even more preferably at least eight times per day, evenly or unevenly spaced throughout the day The TTD's 31 and 32 can be moved to different points within the NSUT 9 depending upon the network segments to be tested.

An example test scenario is: A Gigabit Ethernet LAN with a 500 Mb/s Bottleneck Bandwidth (rate limited logical interface), and 5 msec round trip time (RTT).

Accordingly the BDP = 500 Mbits/s x 5 msec / 8 bits/byte = 312 KBytes

Accordingly five TCP connections of 62.5 KB Send Socket Buffer and TCP RWND Sizes are required to evenly fill the Bottleneck Bandwidth (∼100 Mbps per connection).

Once the bandwidth capacity and the RTT are measured, the BDP can be calculated, as above and as in step 104 of Figure 4; however, to properly stress network buffers and the traffic shaping function, the cumulative TCP window should be equal to a scaling factor, e.g. 1.5 to 2, times the size of the BDP. By cumulative TCP window, this equates to:

TCP Window size for each connection x number of connections

Example, if the BDP is equal to 256 Kbytes and a connection size of 64 Kbytes is used for each connection, then it would require four connections to fill the BDP (4x64=256 Kbytes) and six (1.5x4) to 8 (2x4) connections, i.e. by multiplying by the scaling factor, to stress test the traffic shaping function. The traffic shaping capability will vary according to equipment manufacturer, so some experimentation will be required to determine the proper scaling factor, e.g. 1.5 to 2.0. The actual determination of the proper scaling factor, step 105 in Figure 4, is an optional step in the present invention, and can be pre-determined in accordance with previous experimentation, experience or knowledge of the testing devices and NSUT 9.

Next, the first TTD 31 is configured to be the client function and the second TTD 32 is configured to be the server; the traffic shaping test will first be conducted as an upload in the direction of the client to the server, as in step 106 of Figure 4. With the multiple connections configured, the client (first) TTD device 31 must be able to obtain a source IP address and also be configured to communicate with the IP address of the server (second) TTD device 32. Also, a mutually agreed to TCP port must be configured on both client and server TTD devices 31 and 32. The server TTD 32 listens on this port for the client's connections.

The traffic shaping test should be run for a minimum of 60 seconds, and preferably up to 5 minutes; this ensures that buffers are properly stressed in the NSUT 9. During the test execution, the throughput charts of the TCP throughput vs time are graphed, and ideally displayed on a suitable display device on one or both of the TTD devices 31 and 32, for each connection to the Client TTD 32, as illustrated in step 107 of Figure 4. Ideally, according to the present invention the throughput, retransmissions and RTT per connection are all collected in real-time up to speeds of 10GigE. To determine if the traffic is shaped and shaped properly, the controller 35 determines whether the network utilization for each connection varies by more than a predetermined threshold amount from an ideal, e.g. equally-shared bandwidth, i.e. the total bottleneck bandwidth divided by the number of connections. Typically, an even distribution of bandwidth for each connection across the selected time limit represents a proper traffic shaping system, although each connection may have a different ideal bandwidth depending upon predetermined contracts or arrangements. An allowance of up to 15%, and preferably up to 10%, throughput variation is specified as the threshold for the even distribution and the overall "verdict" that the traffic is shaped.

The throughput tests, step 106, can then be repeated in the other direction, i.e. from the second TTD 32 to the first TTD 31, as in step 108 of Figure 4, to test the upstream path, as well.

The above-described TTD's 31 and 32 of the present invention can be implemented in any of numerous ways in either portable field testing devices or more permanent network installed testing devices. For example, the embodiments may be implemented using hardware, software or a combination thereof. When implemented in software, the functions may be stored as one or more instructions or code on a non-transitory computer-readable or processor-readable storage medium. The steps of a method or algorithm disclosed herein may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

## Claims

1. A method of testing whether a network segment is properly traffic shaped comprising:
providing first and second testing devices at opposite ends of the network segment;
determining bandwidth capacity of the network segment;
determining round trip time between first and second testing devices;
determining bandwidth delay product from bandwidth capacity and round trip time;
determining number of connections to provide a cumulative TCP window greater than the bandwidth delay product;
transmitting data over the number of connections at the cumulative TCP window from the first testing device to the second testing device; and
generating a throughput chart for the connections to determine if the network segment is properly traffic shaped.

2. The method according to claim 1, wherein the step of determining bandwidth capacity includes transmitting stateless IP traffic between the first and second testing devices

3. The method according to claim 2, wherein the stateless IP traffic comprises user datagram protocol (UDP) packets.

4. The method according to claim 1, wherein the step of determining bandwidth capacity includes gradually increasing traffic launched into network segment from the first testing device to the second testing device until a maximum capacity is reached, which is the maximum capacity before packet loss occurs at the second testing device.

5. The method according to claim 1, wherein the steps of determining bandwidth capacity and determining round trip time are repeated a plurality of times to verify the accuracy.

6. The method according to claim 1, further comprising transmitting data over the number of connections at the cumulative TCP window from the second testing device to the first testing device.

7. The method according to claim 1, wherein the step of determining number of connections includes multiplying the bandwidth delay product by a scaling factor.

8. The method according to claim 7, wherein the scaling factor is from 1.5 to 2.0.

9. The method according to claim 7, further comprising determining the scaling factor by experimentation.

10. The method according to claim 1, wherein the step of generating a throughput chart to determine if the network segment is properly traffic shaped includes determining if a connection network utilization for each connection varies by less than 10% of an ideal shared bandwidth.

11. The method according to claim 1, wherein the step of generating a throughput chart to determine if the network segment is properly traffic shaped includes determining if a connection network utilization for each connection varies by less than 15% of an ideal shared bandwidth.

12. The method according to claim 1, wherein the step of generating a throughput chart to determine if the network segment is properly traffic shaped includes determining if a connection network utilization for each connection varies by less than 10% of an ideal equally-shared bandwidth.

13. The method according to claim 1, wherein the step of generating a throughput chart to determine if the network segment is properly traffic shaped includes determining if a connection network utilization for each connection varies by less than 15% of an ideal equally-shared bandwidth.

14. The method according to claim 1, wherein the step of generating a throughput chart for the connections is conducted in real-time.

15. The method according to claim 1, wherein the step of generating a throughput chart for the connections is conducted post analysis.

16. A computer program, which when executed by a processor, is configured to perform the method according to claim 1.
